# EUROPÄISCHE PATENTSCHRIFT

(11) **EP 3 152 141 B1**
(45) Veröffentlichungstag und Bekanntmachung des Hinweises auf die Patenterteilung: **29.04.2020**
(21) Anmeldenummer: 15726592.7
(22) Anmeldetag: 01.06.2015
(51) Int. Cl.: B65G 65/28

(54) **PORTALKRATZER MIT AUF EINER FACHWERKKONSTRUKTION BASIERENDEN TRAGKONSTRUKTION**
PORTAL SCRAPER HAVING A LOAD-BEARING STRUCTURE BASED ON A FRAMEWORK STRUCTURE
GRATTEUR PORTIQUE PRÉSENTANT UNE STRUCTURE DE SUPPORT SE BASANT SUR UNE STRUCTURE EN TREILLIS

(30) Priorität: 03.06.2014 DE 102014107813
(43) Veröffentlichungstag der Anmeldung: 12.04.2017
(73) Patentinhaber: Schade Lagertechnik GmbH, 45883 Gelsenkirchen (DE)
(72) Erfinder: DUNKEL, Gerd, 44229 Dortmund (DE); JUNG, Wolfgang, 63110 Rodgau (DE); JUNKER, Andreas, 29358 Eicklingen (DE)
(74) Vertreter: Feucker, Max Martin
(86) Internationale Anmeldenummer: PCT/EP2015/062073
(87) Internationale Veröffentlichungsnummer: WO 2015/185476

(56) Entgegenhaltungen:
- DE-A1- 1 531 002
- DE-A1- 2 214 872
- DE-A1- 3 834 780
- DE-A1-102012 221 031
- DE-B1- 1 817 395
- DE-U- 1 919 980
- DE-U1- 20 019 759

## Beschreibung

Die vorliegende Erfindung betrifft einen Portalkratzer zum Auslagern von Schüttgütern, umfassend eine längs einer Schüttguthalde verfahrbare, auf einer Fachwerkkonstruktion basierende Tragkonstruktion und einen Ausleger, welcher mittels einer an der Tragkonstruktion und dem Ausleger angreifenden Seilumlenkung in einer vertikalen Ebene hebbar oder senkbar ist, wobei die Tragkonstruktion wenigstens einen die Schüttguthalde übergreifenden geneigten Abschnitt aufweist.

Für die Lagerung von Schüttgütern werden die Schüttgüter unter Ausbildung mindestens einer eine geneigte Oberfläche aufweisenden Schüttguthalde in ein Haldenlager eingebracht. Zum Auslagern des Schüttgutes wird ein Kratzer in Anlage mit der Oberfläche der Schüttguthalde gebracht, wobei der Kratzer das Schüttgut von der Schüttguthalde oberflächlich abzieht und einer am Fuße der Schüttguthalde angeordneten Transportvorrichtung zuleitet. Der Kratzer ist dafür an einem vertikal heb- und senkbaren Ausleger geführt, der an einer portalartigen, längs der Schüttguthalde verfahrbaren Tragkonstruktion schwenkbar gelagert ist. Die Tragkonstruktion und der daran heb- und senkbar schwenkbar gelagerte Ausleger sind mit Laufrädern auf Schienen längs der Schüttguthalde verfahrbar. Bei einem Vollportalkratzer liegen die Schienen beidseitig am Fuße der Schüttguthalde in einer horizontalen Ebene, während bei einem Halbportalkratzer eine Seite der Tragkonstruktion mit Laufrädern auf einer Schiene am Fuße der Schüttguthalde und die andere Seite mit Laufrädern auf einer Schiene aufliegt, welche wiederum auf einer die Schüttguthalde begrenzenden Wand aufliegt und parallel zu der Schiene am Haldenfuß in der Höhe vertikal versetzt ist.

Ein Portalkratzer mit den eingangs genannten, gattungsgemäßen Merkmalen ist in der DE 1 817 395 B wie auch in der DE 1 919 980 U beschrieben, die einen Portalkratzer nach dem Oberbegriff des Anspruchs 1 offenbaren, wobei hinsichtlich der Tragkonstruktion bereits die Ausbildung in Form einer Fachwerkkonstruktion vorgeschlagen ist. Gegenüber der ebenso angesprochenen kastenförmigen Ausbildung der Tragkonstruktion bietet die Fachwerkkonstruktion bereits den Vorteil eines insgesamt niedrigeren Gewichts und auch einer schnelleren Herstellung. Nachteilig ist jedoch, dass die Spurbreite in Form des Abstandes zwischen den die Tragkonstruktion tragenden Fahrwerken jeweils für jedes einzelne Schüttgutlager festzulegen ist, auch weil bei den bekannten Portalkratzern der Ausleger seitlich der Tragkonstruktion gelagert ist, um einen möglichst großen vertikalen Schwenkwinkel des Auslegers sicherzustellen. Dies resultiert allerdings in einer ungleichmäßigen Belastung der Fahrwerke und der Portalstruktur, so dass jeder Portalkratzer für eine bestimmte Spurbreite mit relativ großem Aufwand neu konstruiert werden muss.

Ein Kratzer eines solchen Portalkratzers ist beispielsweise aus DE 10 2008 018 381 A1 bekannt. Ferner ist aus DE 101 12 342 A1 ein Haldenkreislager mit einem kreisförmig schwenkbaren Halbportalkratzer bekannt.

Ausgehend hiervon ist es also Aufgabe der vorliegenden Erfindung, die mit Bezug zum Stand der Technik geschilderten Probleme zumindest teilweise zu lösen und insbesondere einen Portalkratzer anzugeben, dessen Spurbreite konstruktionsseitig einfach veränderbar ist und der eine höhere Spurbreite erreichen kann.

Gelöst wird diese Aufgabe durch einen Portalkratzer mit den Merkmalen des unabhängigen Anspruchs. In den abhängigen Ansprüchen und in der Beschreibung sind vorteilhafte Weiterbildungen des Portalkratzers angegeben, wobei Merkmale der vorteilhaften Weiterbildungen in technologisch sinnvoller Weise beliebig miteinander kombinierbar sind.

Die Aufgabenlösung beruht auf dem Grundgedanken, dass die Fachwerkkonstruktion mindestens ein Fachwerkkonstruktionspassstück und der Ausleger mindestens ein Auslegerpassstück enthält, so dass der Portalkratzer modulartig in seiner Spurbreite entsprechend der Länge des Auslegerpassstückes veränderbar ist, wobei die Länge des Fachwerkkonstruktionspassstückes und die Länge des Auslegerpassstückes aufeinander abgestimmt sind

Der Portalkratzer fährt beidseitig der Schüttguthalde mittels an Fahrwerken angebrachten Laufrädern auf Schienen. Die Fahrwerke sind an beiden Seiten der Tragkonstruktion ausgebildet, wobei ein oder mehrere angetriebene(s) Fahrwerk(e) an beiden Seiten ausgebildet sind. Der horizontale Abstand dieser Laufräder definiert im Wesentlichen die Spurbreite des Portalkratzers, welche auch als Spannweite bezeichnet wird. Der Portalkratzer ist bevorzugt ein Halbportalkratzer, bei dem sowohl das Fahrwerk auf einer A-Seite am Fuße der Schüttguthalde auf einer Lauffläche oder Schiene aufliegt als auch ein Fahrwerk auf einer B-Seite auf einer Lauffläche oder Schiene auf einem Kopf einer Schüttguthalden trennenden W and, vertikal und horizontal versetzt zu dem Fahrwerk auf der A-Seite aufliegt.

Durch die Verwendung einer Fachwerkkonstruktion für die Tragkonstruktion ist es möglich, das Gewicht der Tragkonstruktion wesentlich zu verringern und so auch höhere Spannweiten des Portalkratzers zu erreichen. Ferner ist mit der Fachwerkkonstruktion der Vorteil verbunden, dass die Bestandteile der Fachwerkkonstruktion in kleineren Einheiten transportiert werden können. Durch die Verwendung der Fachwerkkonstruktion ist zudem eine kürzere Montagezeit möglich, da einzelne Elemente der Fachwerkkonstruktion bereits in der Werkstatt verschraubt und damit vorgefertigt werden können. Diese vorgefertigten Elemente werden auf der Baustelle verschraubt und somit entfällt die aufwendige Verschweißung der bei den herkömmlichen Tragkonstruktionen verwendeten Elemente. Des Weiteren wird durch die offene Fachwerkbauweise der Geräuschpegel im Betrieb reduziert, da kein Resonanzkörper vorliegt. Die Verwendung von einer Fachwerkkonstruktion hat zudem den Vorteil, dass die Tragkonstruktion zunächst innerhalb einer Hallenbox liegend montiert werden kann und dann mit Hilfe eines Kranes in die Endposition gehoben werden kann. Durch die Fachwerkkonstruktion wird weiterhin ein erheblicher Steifigkeitszuwachs generiert, welcher sich in Form von geringeren Verformungen darstellt, und somit entfaltet der erhebliche Aufwand einer Systemüberhöhung. Ein weiterer Vorteil der Fachwerkkonstruktion ist die geringere Windbeanspruchung wegen geringerer Windangriffsfläche gegenüber den bekannten Portalkratzern.

An der Tragkonstruktion ist ein Ausleger insbesondere vertikal schwenkbar gelagert, wobei der Schwenkwinkel des Auslegers durch eine an der Tragkonstruktion und dem Ausleger angreifende, insbesondere eine Winde umfassende Seilumlenkung verändert werden kann. An dem Ausleger sind insbesondere zwei Ketten und mehrere Schaufeln als Kettensystem umlaufend installiert, wobei zum Auslagern des Schüttgutes von der Schüttguthalde der vertikal schwenkbar gelagerte Ausleger auf der Schüttguthalde aufgelegt wird und so das Schüttgut in Schichten von oben in Verbindung mit dem Vortrieb der Maschine von der Schüttguthalde abgetragen wird.

Die Erfindung sieht nun unter Anderem vor, dass die Fachwerkkonstruktion mindestens ein Fachwerkkonstruktionspassstück und der Ausleger mindestens ein Auslegerpassstück enthält, deren Längen so aufeinander abgestimmt sind, dass durch das Hinzufügen oder Entfernen einer gleichen Anzahl von Passstücken in der Tragkonstruktion und entsprechend in dem Ausleger die der Spurbreite entsprechende Spannweite des Portalkratzers modulartig veränderbar ist. Die Passstücke sind insbesondere im Hinblick auf ihre stirnseitigen Verbindungsstellen so ausgelegt, dass die Passstücke hintereinander montiert werden können, wobei Bestandteile der Fachwerkkonstruktion beziehungsweise des Auslegers entsprechende Verbindungsstellen aufweisen, an denen oder zwischen denen die Passstücke mit ihren Verbindungsstellen montiert werden können. Da die Tragkonstruktion einen mit einem Neigungswinkel angeordneten Abschnitt umfasst und das Fachwerkkonstruktionspassstück insbesondere in diesem geneigten Abschnitt der Tragkonstruktion ausgebildet ist, ist die Länge des Fachwerkkonstruktionspassstückes insbesondere entsprechend des Neigungswinkels der Tragkonstruktion größer als die Länge des Auslegerpassstückes. Der unveränderbare Neigungswinkel des geneigten Abschnittes der Tragkonstruktion liegt je nach Ausführungsform insbesondere zwischen 35 Grad und 50 Grad, insbesondere bei genau 45 Grad. Durch die Verwendung eines solchen modulartigen Baukastenprinzips für Portalkratzer ist der Konstruktionsaufwand für neue Portalkratzer mit einer geänderten Spurbreite stark verringert. Ferner können durch ein Baukastenprinzip für Bestandteile eines Portalkratzers die Lieferzeiten eines Portalkratzers erheblich verkürzt werden.

Gemäß einer Ausgestaltung des Portalkratzers ist an dem Ausleger ein umlaufendes Kettensystem mit mindestens einem Kettenstrang, insbesondere mit genau zwei Kettensträngen angeordnet und die Länge des Auslegerpassstückes ist ein Vielfaches der Kettenteilung des Kettenstrangs. Mit der Kettenteilung ist insbesondere der Abstand zwischen den zwei Gelenkachsen eines Kettengliedes gemeint. Somit kann bei einer modulartigen Änderung der Spurbreite des Portalkratzers der mindestens eine Kettenstrang des Kettensystems einfach an die Spurbreite des Portalkratzers angepasst werden, wodurch der Konstruktionsaufwand und die Fertigung des Portalkratzers weiter vereinfacht wird.

Gemäß einer weiteren Ausgestaltung des Portalkratzers ist an dem Ausleger ein Schaufeln umfassendes Kettensystem angeordnet, wobei die Schaufeln austauschbar sind, so dass die Breite der Schaufeln anpassbar ist. Damit ist insbesondere gemeint, dass der Ausleger und die Tragkonstruktion so konstruiert sind, dass verschiedene Schaufelbreiten in Abhängigkeit der eingesetzten Kette eingebaut werden können. Die Tragkonstruktion basiert auf der maximalen Schaufelbreite, welche für den Portalkratzer zugelassen wird. Somit sind aber auch für eine vorgegebene Spurbreite in Abhängigkeit der Schaufelbreiten unterschiedliche Förderleistungen möglich, wodurch ebenfalls der Konstruktionsaufwand weiter reduziert wird.

Gemäß einer weiteren Ausgestaltung des Portalkratzers ist der Ausleger symmetrisch zu Fahrwerken der Tragkonstruktion angeordnet. Insbesondere ist der Ausleger sowohl symmetrisch, bevorzugt insbesondere mittig zu den Laufrädern der Fahrwerke als auch symmetrisch, bevorzugt mittig zu der Tragkonstruktion angeordnet. Durch die symmetrische Anordnung werden die Radlasten in den Fahrwerken gleichmäßiger verteilt. Dies bedeutet eine bessere Ausnutzung der Laufräder und Kopfträger.

In einer weiteren Ausbildung des Portalkratzers ist vorgesehen, dass die Fachwerkkonstruktion der Tragkonstruktion aus zwei Fachwerkseitenscheiben und einer Fachwerkoberscheibe besteht, damit der Ausleger zwischen die Fachwerkseitenscheiben der Fachwerkkonstruktion vertikal geschwenkt werden kann. Die Fachwerkkonstruktion der Tragkonstruktion weist somit lediglich eine liegende Fachwerkoberscheibe als Obergurt sowie zwei senkrecht stehende Fachwerkseitenscheiben als Seitengurte auf, wobei der Ausleger und die Seilumlenkung so ausgelegt sind, dass der Ausleger bei einem maximalen Schwenkwinkel zwischen den Fachwerkseitenscheiben angeordnet ist. Eine Fachwerkscheibe in der Untergurteben ist also nicht vorgesehen. Dadurch hat die Fachwerkkonstruktion einen Querschnitt wie ein auf den Kopf gestelltes U. Dies hat insbesondere den Vorteil, dass die Tragkonstruktion eine geringere Höhe haben kann.

In diesem Zusammenhang ist insbesondere vorgesehen, dass ein an dem Ausleger geführtes Kettensystem mit mindestens zwei Motoren angetrieben wird. Dadurch wird zum einen eine bessere Lastverteilung für die Fahrwerke erreicht und zum anderen werden ein geringeres Gewicht aufweisende, kleinere Antriebe und im Durchmesser geringere Antriebswellen benötigt.

Um die Sicherheit für das Bedienpersonal zu erhöhen, ist vorgesehen, dass eine insbesondere abschnittsweise versetzt angeordnete Treppenläufe umfassende Treppenanlage zur Begehung der Tragkonstruktion auf der Fachwerkoberscheibe und/oder zwischen den Fachwerkseitenscheiben der Fachwerckonstruktion angeordnet ist. Die versetzt zueinander angeordneten Treppenläufe sind über Podeste miteinander verbunden. Im Falle eines Sturzes ist so das Fallen auf einen Treppenlauf begrenzt.

Während bei bekannten Portalkratzern die Bedienung von einem Steuerstand aus im Bereich der Fahrwerke vorgesehen war, ist in einer Ausgestaltung des Portalkratzers eine überdachte Steuerkabine, insbesondere in der Höhe der Seilumlenkung auf der Fachwerkkonstruktion angeordnet, so dass eine Bedienperson von der überdachten Steuerkabine aus einen besseren Überblick über die Schüttguthalde und über den Arbeitsbereich des Portalkratzers hat.

Gemäß einer Weiterbildung des Portalkratzers ist die Fachwerkkonstruktion als Rohrkonstruktion oder mit offenen Profilen ausgeführt. Es kann zudem vorgesehen sein, dass der Portalkratzer in der Werkstatt vorgefertigte Module und Passstücke zur schnelleren Montage sowie zur Vereinfachung des Konstruktionsaufwandes umfasst.

In einer weiteren Ausführungsform ist vorgesehen, dass die Auslegerpassstücke und/oder die Fachwerkkonstruktionspassstücke des Portalkratzers im Rahmen eines Baukastens mit verschiedenen Stufen in Abhängigkeit eines Spannweitenintervalls vorgehalten werden. So ist beispielsweise für eine Spannweite zwischen 16 und 20 Meter eine Stufe des Baukastens vorgesehen, bei dem das Auslegerpassstück eine Länge von 2 Metern hat. Es können Schaufelbreiten von 750 Millimetern bis 1250 Millimetern eingesetzt werden. Bei einem größeren Intervall der Spannweite von beispielsweise 54 bis 62 Metern hat das Auslegerpassstück eine Länge von 4 Metern und es können Schaufelbreiten von 3250 bis 3750 Millimeter eingesetzt werden.

Gemäß den Ausführungsbeispielen kann der erfindungsgemäße Portalkratzer einerseits als Halbportalkratzer oder alternativ als Vollportalkratzer ausgebildet sein; beide Portalkratzerausführungen sind im Stand der Technik bekannt.

Die Erfindung sowie das technische Umfeld werden nachfolgend anhand der Figuren beispielhaft erläutert, wobei darauf hinzuweisen ist, dass die Figuren bevorzugte Ausführungsformen der Erfindung zeigen, diese jedoch nicht darauf beschränkt ist. Es zeigen schematisch
- Fig. 1:: eine räumliche Ansicht einer Tragkonstruktion und eines Auslegers am Beispiel eines Halbportalkratzers,
- Fig. 2:: eine Seitenansicht der Tragkonstruktion des Halbportalkratzers,
- Fig. 3:: eine Draufsicht auf die Tragkonstruktion des Halbportalkratzers,
- Fig. 4:: eine Draufsicht auf den Ausleger des Halbportalkratzers,
- Fig. 5:: eine Seitenansicht eines zweiten Halbportalkratzers und
- Fig. 6:: eine Seitenansicht auf eine Tragkonstruktion am Beispiel eines Vollportalkratzers.

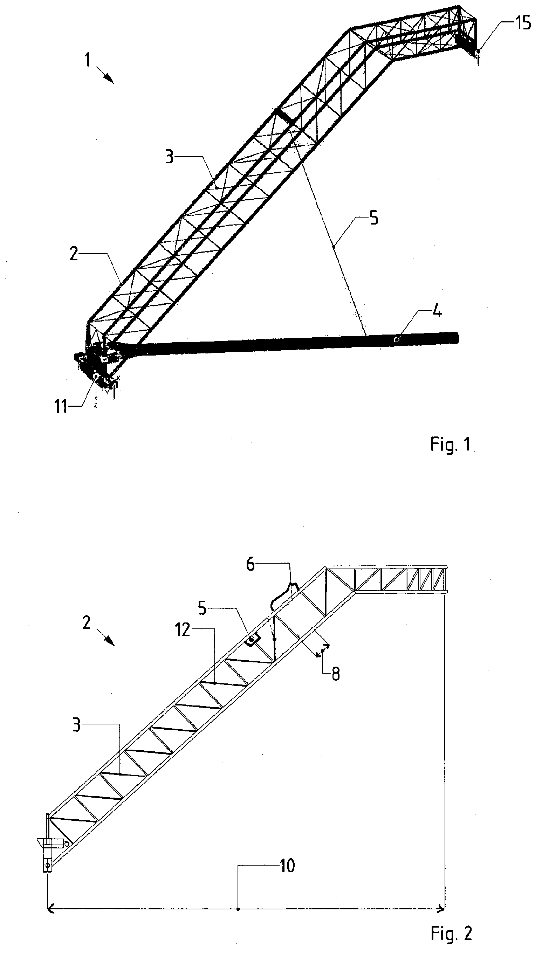

Fig. 1 zeigt perspektivisch einen Halbportalkratzer 1 mit einer Fachwerkkonstruktion 3 als Tragkonstruktion 2, an der ein Ausleger 4 vertikal schwenkbar gelagert ist. Der Ausleger 4 kann mittels eines Seilsystems mit Winde über eine Seilumlenkung 5 angehoben oder abgesenkt werden. Der Halbportalkratzer 1 weist auf einer A-Seite ein angetriebenes Fahrwerk 11 auf, mit welchem der Halbportalkratzer 1 entlang einer Schüttguthalde auf einer Schiene verfahrbar ist. Auf einer der A-Seite gegenüberliegenden B-Seite der Tragkonstruktion 2 befindet sich ebenfalls ein angetriebenes Fahrwerk 15, das auf einer hier nicht dargestellten Schiene aufliegt, welche wiederum auf einer die Schüttguthalde begrenzenden W and angeordnet ist.

Wie aus der Seitenansicht der Fig. 2 zu erkennen ist, weist die Tragkonstruktion 2 und damit der Halbportalkratzer 1 eine Spurbreite 10 auf. Aus Figur 2 ist auch zu erkennen, dass die Fachwerkkonstruktion 3 oberhalb der Seilumlenkung 5 ein Fachwerkkonstruktionspassstück 6 umfasst, das eine Länge 8 aufweist. Ferner ist eine Fachwerkseitenscheibe 12 der Fachwerkkonstruktion zu erkennen.

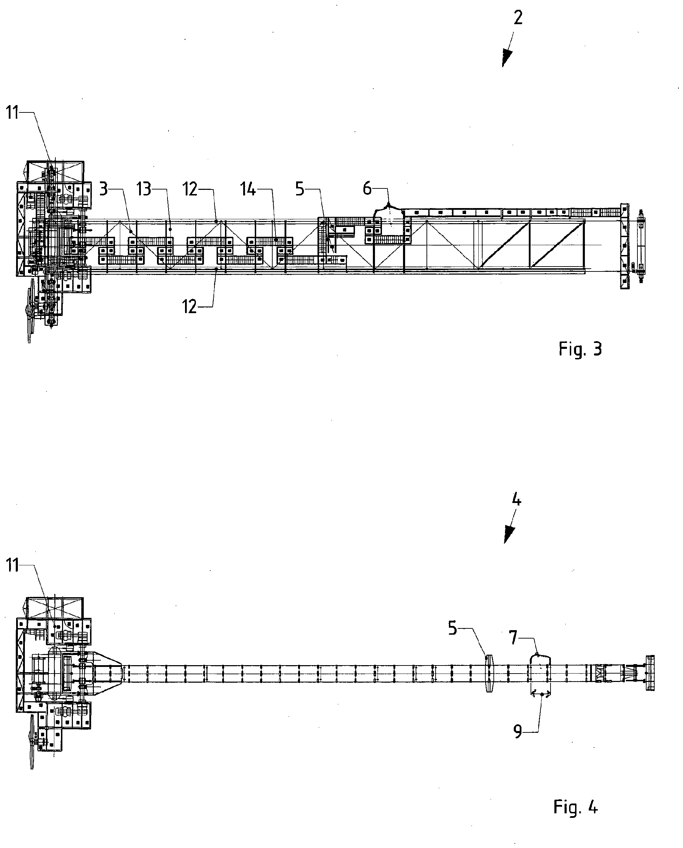

In Fig. 3 ist eine Draufsicht auf die Tragkonstruktion 2 dargestellt, aus der hervorgeht, dass auf einer Fachwerkoberscheibe 13 als Obergurt eine Treppenanlage 14 mit seitlich versetzt zueinander angeordneten Treppenläufen angeordnet ist, welche durch Podeste miteinander verbunden sind.

Die in Fig. 4 dargestellte Draufsicht auf den Ausleger 4 zeigt, dass der Ausleger 4 rechts von der Seilumlenkung 5 ein Auslegerpassstück 7 mit einer Länge 9 umfasst.

Die vorliegende Erfindung sieht nun vor, dass die Länge 9 des Auslegerpassstückes 7 auf die Länge 8 des Fachwerkkonstruktionspassstückes 6 angepasst ist, so dass eine Spurbreite 10 des Halbportalkratzers 1 modulartig um die Länge 9 des Auslegerpassstückes 7 vergrößert werden kann.

Aus der Zusammenschau von Fig. 3 und Fig. 4 ist auch ersichtlich, dass sowohl die Tragkonstruktion 2 als auch der Ausleger 4 symmetrisch zueinander und zu den Fahrwerken 11, 15 angeordnet sind, so dass die Radlasten an den Fahrwerken 11, 15 gleichmäßig verteilt sind.

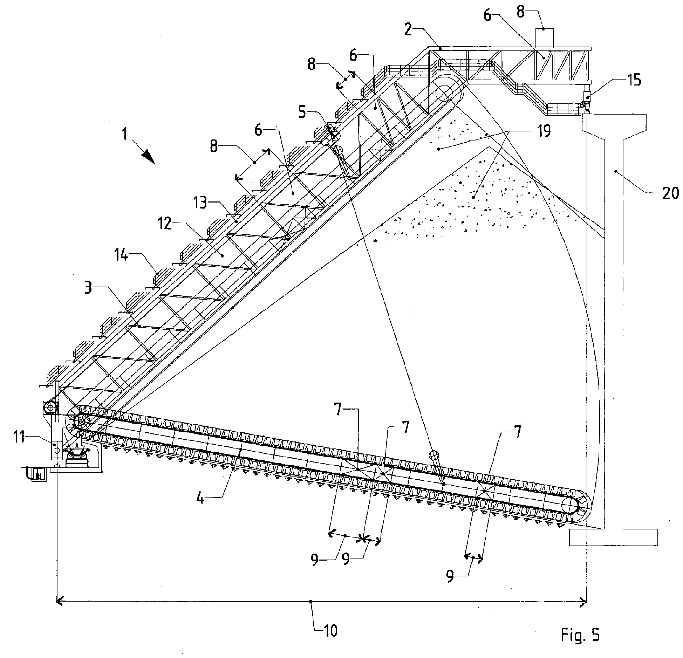

In Fig. 5 ist ein weiterer Halbportalkratzer 1 dargestellt, wobei die modulartige Bauweise und die Funktion der Passstücke dem zuvor beschriebenen Prinzip entsprechen. Im Folgenden wird daher hauptsächlich auf die Unterschiede zu dem zuvor beschriebenen Halbportalkratzer eingegangen.

Der in Fig. 5 dargestellte Halbportalkratzer 1 liegt auf der B-Seite auf einer Wand 20 auf, die die Schüttguthalde 19 begrenzt und von weiteren Schüttguthalden trennt. In Fig. 5 sind zwei verschieden große Schüttguthalden 19 angedeutet, so dass sich unterschiedliche Neigungswinkel der Oberflächen der Schüttguthalden 19 einstellen.

Zudem weist der Ausleger 4 Auslegerpassstücke 7 mit unterschiedlichen Längen 9 auf. Entsprechend weist auch die Fachwerkkonstruktion 3 Fachwerckonstruktionspassstücke 6 mit unterschiedlichen Längen 8 auf. Dabei sind die Längen 9 der links von der Winde der Seilumlenkung 5 angeordnete Auslegerpassstücke 7 auf die Längen 8 der im geneigten Abschnitt der Fachwerckonstruktion 3 angeordneten Fachwerkkonstruktionspassstücke 6 abgestimmt, während das rechts der Winde der Seilumlenkung 5 im Ausleger 4 angeordnete Auslegerpassstück 7 mit seiner Länge 9 der Länge 8 des Fachwerkkonstruktionspassstücks 6 in dem horizontalen Abschnitt der Fachwerkkonstruktion 3 entspricht.

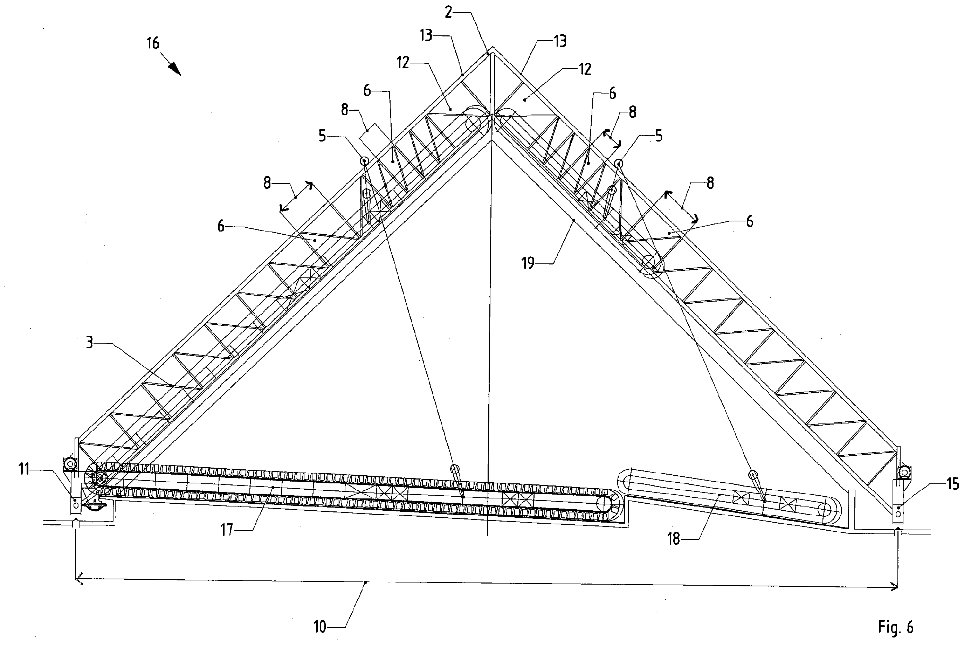

Die in Fig. 6 dargestellte Ansicht zeigt einen Vollportalkratzer 16 mit zwei Auslegern als Hauptausleger 17 und Zusatzausleger 18. Im Gegensatz zu dem Halbportalkratzer 1 liegen hier beide Fahrwerke am Haldenfuß. Die modulartige Bauweise und die Funktion entsprechen dem mit Bezug zum Halbportalkratzer beschriebenen Prinzip.

### Bezugszeichenliste

- 1: Halbportalkratzer
- 2: Tragkonstruktion
- 3: Fachwerkkonstruktion
- 4: Ausleger
- 5: Seilumlenkung
- 6: Fachwerkkonstruktionspassstück
- 7: Auslegerpassstück
- 8: Länge des Fachwerkkonstruktionspassstückes
- 9: Länge des Auslegerpassstückes
- 10: Spurbreite
- 11: Fahrwerk (A-Seite)
- 12: Fachwerkseitenscheibe
- 13: Fachwerkoberscheibe
- 14: Treppenanlage
- 15: Fahrwerk (B-Seite)
- 16: Vollportalkratzer
- 17: Hauptausleger
- 18: Zusatzausleger
- 19: Schüttguthalde
- 20: Wand

## Patentansprüche

1. Portalkratzer (1, 16) zum Auslagern von Schüttgütern, umfassend eine längs einer Schüttguthalde (19) verfahrbare, auf einer Fachwerkkonstruktion (3) basierende Tragkonstruktion (2) und einen Ausleger (4, 17, 18), welcher mittels einer an der Tragkonstruktion (2) und dem Ausleger (4) angreifenden Seilumlenkung (5) in einer vertikalen Ebene hebbar oder senkbar ist, wobei die Tragkonstruktion (2) wenigstens einen die Schüttguthalde übergreifenden geneigten Abschnitt aufweist, **dadurch gekennzeichnet, dass** die Fachwerkkonstruktion (3) mindestens ein Fachwerkkonstruktionspassstück (6) und der Ausleger (4, 17, 18) mindestens ein Auslegerpassstück (7) enthält, so dass der Portalkratzer (1) modulartig in seiner Spurbreite (10) entsprechend der Länge (9) des Auslegerpassstückes (7) veränderbar ist, wobei die Länge (8) des Fachwerkkonstruktionspassstückes (6) und die Länge (9) des Auslegerpassstückes (7) so aufeinander abgestimmt sind, dass durch das Hinzufügen oder Entfernen einer gleichen Anzahl von Fachwerkkonstruktionspassstücken (6) in der Tragkonstruktion (2) und von Auslegerpassstücken (7) in dem Ausleger (4, 17, 18) die Spurbreite (10) des Portalkratzers (1, 16) modulartig veränderbar ist.

2. Portalkratzer (1, 16) nach Anspruch 1, wobei an dem Ausleger (4, 17, 18) ein umlaufendes Kettensystem mit mindestens einem Kettenstrang angeordnet ist und die Länge (9) des Auslegerpassstückes (7) ein Vielfaches der Kettenteilung des Kettenstrangs ist.

3. Portalkratzer (1, 16) nach Anspruch 1 oder 2, wobei an dem Ausleger (4, 17, 18) ein Schaufeln umfassendes Kettensystem angeordnet ist und die Schaufeln austauschbar sind, so dass die Breite der Schaufeln anpassbar ist.

4. Portalkratzer (1, 16) nach einem der vorhergehenden Ansprüche, wobei der Ausleger (4, 17, 18) symmetrisch zu Fahrwerken (11, 15) der Tragkonstruktion (2) angeordnet ist.

5. Portalkratzer (1, 16) nach einem der vorhergehenden Ansprüche, wobei die Fachwerkkonstruktion (3) der Tragkonstruktion (2) aus zwei Fachwerkseitenscheiben (12) und einer Fachwerkoberscheibe (13) besteht, damit der Ausleger (4) zwischen die Fachwerkseitenscheiben (12) der Fachwerkkonstruktion (3) vertikal geschwenkt werden kann.

6. Portalkratzer (1, 16) nach einem der vorhergehenden Ansprüche, wobei das an dem Ausleger (4, 17, 18) geführte Kettensystem mit mindestens zwei Motoren angetrieben wird.

7. Portalkratzer (1, 16) nach einem der vorhergehenden Ansprüche, wobei eine Treppenanlage (14) zur Begehung der Tragkonstruktion (2) auf einer Fachwerkoberscheibe (13) und/oder zwischen Fachwerkseitenscheiben (12) der Fachwerkkonstruktion (3) angeordnet ist.

8. Portalkratzer (1, 16) nach einem der vorhergehenden Ansprüche, wobei eine überdachte Steuerkabine auf der Fachwerkkonstruktion (3) angeordnet ist.

9. Portalkratzer (1, 16) nach einem der vorhergehenden Ansprüche, wobei die Fachwerkkonstruktion (2) als Rohrkonstruktion oder mit offenen Profilen ausgeführt ist.

10. Portalkratzer (1, 16) nach einem der vorhergehenden Ansprüche mit vorgefertigten Modulen und Passstücken (6, 8) zur schnelleren Montage sowie zur Vereinfachung des Konstruktionsaufwandes.

11. Portalkratzer (1) nach einem der vorhergehenden Ansprüche, wobei der Portalkratzer als Halbportalkratzer (1) ausgebildet ist, bei welchem an einer Seite der Tragkonstruktion (2) ein am Fuße der Schüttguthalde (19) angeordnetes Fahrwerk (11) angeordnet ist und an der anderen Seite der Tragkonstruktion (2) ein auf einer die Schüttguthalde (19) begrenzenden Wand (20) angeordnetes Fahrwerk (15).

12. Portalkratzer (16) nach einem der vorhergehenden Ansprüche, wobei der Portalkratzer (16) als Vollportalkratzer ausgebildet ist, bei welchem auf beiden Seiten der Schüttguthalde (19) an deren jeweiligem Fuß je ein Fahrwerk (11, 15) für die die Schüttguthalde (19) überspannende Tragkonstruktion (2) angeordnet ist.

## Claims

1. A portal scraper (1, 16) for unloading bulk materials, comprising a support structure (2) that can move along a bulk material dump (19) and is based on a framework structure (3), and a boom (4, 17, 18), which can be lifted or lowered in a vertical plane by means of a rope deflection (5) that acts on the support structure (2) and boom (4), wherein the support structure (2) has at least one inclined section that overlaps the bulk material dump, **characterized in that** the framework structure (3) contains at least one framework structure adaptor piece (6) and the boom (4, 17, 18) contains at least one boom adaptor piece (7), so that the portal scraper (1) can be modularly varied in its track width (10) corresponding to the length (9) of the boom adaptor piece (7), wherein the length (8) of the framework structure adaptor piece (6) and the length (9) of the boom adaptor piece (7) are tailored to each other in such a way that adding or subtracting the same number of framework structure adaptor pieces (6) in the support structure (2) and boom adaptor pieces (7) in the boom (4, 17, 18) makes it possible to modularly vary the track width (10) of the portal scraper (1, 16).

2. The portal scraper (1, 16) according to claim 1, wherein a continuous chain system with at least one chain strand is arranged on the boom (4, 17, 18), and the length (9) of the boom adaptor piece (7) is a multiple of the chain pitch of the chain strand.

3. The portal scraper (1, 16) according to claim 1 or 2, wherein a blade-comprising chain system is arranged on the boom (4, 17, 18), and the blades are exchangeable, so that the width of the blades can be adjusted.

4. The portal scraper (1, 16) according to one of the preceding claims, wherein the boom (4, 17, 18) is arranged symmetrically to chasses (11, 15) of the support structure (2).

5. The portal scraper (1, 16) according to one of the preceding claims, wherein the framework structure (3) of the support structure (2) consists of two side framework plates (12) and an upper framework plate (13), so that the boom (4) can be vertically pivoted between the side framework plates (12) of the framework structure (3).

6. The portal scraper (1, 16) according to one of the preceding claims, wherein the chain system guided on the boom (4, 17, 18) is driven with at least two motors.

7. The portal scraper (1, 16) according to one of the preceding claims, wherein a staircase (14) for traversing the support structure (2) is arranged on an upper framework plate (13) and/or between side framework plates (12) of the framework structure (3).

8. The portal scraper (1, 16) according to one of the preceding claims, wherein a roofed control cabin is arranged on the framework structure (3).

9. The portal scraper (1, 16) according to one of the preceding claims, wherein the framework structure (2) is configured like a pipe structure or with open profiles.

10. The portal scraper (1, 16) according to one of the preceding claims with prefabricated modules and adaptor pieces (6, 8) for faster assembly, as well as for simplifying the construction outlay.

11. The portal scraper (1) according to one of the preceding claims, wherein the portal scraper is designed as a semi-portal scraper (1), in which a chassis (11) arranged at the foot of the bulk material dump (19) is situated on one side of the support structure (2), and a chassis arranged on a wall (20) bordering the bulk material dump (19) is situated on the other side of the support structure (2).

12. The portal scraper (16) according to one of the preceding claims, wherein the portal scraper (16) is designed as a full-portal scraper, in which a chassis (11, 15) for the support structure (2) spanning the bulk material dump (19) is situated on both sides of the bulk material dump (19) at their respective foot.

## Revendications

1. Excavateur à portique (1, 16) servant à extraire des produits en vrac, comprenant une structure porteuse (2) déplaçable le long d'une halde de produits en vrac (19), basée sur une structure en treillis (3) et un bras orientable (4, 17, 18), lequel peut être levé ou abaissé dans un plan vertical au moyen d'un renvoi à câble (5) venant en prise sur la structure porteuse (2) et le bras orientable (4), sachant que la structure porteuse (2) comporte au moins une section inclinée venant en prise sur la halde de produits en vrac, **caractérisé en ce que** la structure en treillis (3) contient au moins une pièce d'adaptation de structure en treillis (6) et le bras orientable (4, 17, 18) au moins une pièce d'adaptation de bras orientable (7) de telle manière que l'excavateur à portique (1) peut être modifié de façon modulaire dans sa largeur de voie (10) en fonction de la longueur (9) de la pièce d'adaptation de bras orientable (7), sachant que la longueur (8) de la pièce d'adaptation de structure en treillis (6) et la longueur (9) de la pièce d'adaptation de bras orientable (7) sont adaptées l'une à l'autre de telle sorte que la largeur de voie (10) de l'excavateur à portique (1, 16) peut être modifiée de façon modulaire en ajoutant ou enlevant un nombre identique de pièces d'adaptation de structure en treillis (6) dans la structure porteuse (2) et de pièces d'adaptation de bras orientable (7) dans le bras orientable (4, 17, 18).

2. Excavateur à portique (1, 16) selon la revendication 1, sachant qu'un système à chaînes périphérique avec au moins un brin de chaîne est disposé sur le bras orientable (4, 17, 18) et la longueur (9) de la pièce d'adaptation de bras orientable (7) est un multiple du pas de chaîne du brin de chaîne.

3. Excavateur à portique (1, 16) selon la revendication 1 ou 2, sachant qu'un système à chaîne comprenant des godets est disposé sur le bras orientable (4, 17, 18) et que les godets peuvent être échangés de telle manière que la largeur des godets peut être adaptée.

4. Excavateur à portique (1, 16) selon l'une quelconque des revendications précédentes, sachant que le bras orientable (4, 17, 18) est disposé symétriquement aux mécanismes de déplacement (11, 15) de la structure porteuse (2).

5. Excavateur à portique (1, 16) selon l'une quelconque des revendications précédentes, sachant que la structure en treillis (3) de la structure porteuse (2) est composée de deux tranches latérales de treillis (12) et d'une tranche supérieure de treillis (13), afin que le bras orientable (4) puisse être verticalement pivoté entre les tranches latérales de treillis (12) de la structure en treillis (3)

6. Excavateur à portique (1, 16) selon l'une quelconque des revendications précédentes, sachant que le système à chaînes guidé sur le bras orientable (4, 17, 18) est entraîné avec au moins deux moteurs.

7. Excavateur à portique (1, 16) selon l'une quelconque des revendications précédentes, sachant qu'une installation d'escalier (14) servant à gravir la structure porteuse (2) est disposée sur une tranche supérieure en treillis (13) et/ou entre les tranches latérales de treillis (12) de la structure en treillis (3).

8. Excavateur à portique (1, 16) selon l'une quelconque des revendications précédentes, sachant qu'une cabine de commande couverte est disposée sur la structure en treillis (3).

9. Excavateur à portique (1, 16) selon l'une quelconque des revendications précédentes, sachant que la structure en treillis (2) est exécutée comme une structure tubulaire ou avec des profilés ouverts.

10. Excavateur à portique (1, 16) selon l'une quelconque des revendications précédentes avec des modules et des pièces d'adaptation préfabriqués (6, 8) pour le montage rapide et la simplification des efforts de conception.

11. Excavateur à portique (1) selon l'une quelconque des revendications précédentes, sachant que l'excavateur à portique (1) est constitué comme un demi excavateur à portique, pour lequel sur un côté de la structure porteuse (2) est disposé un mécanisme de déplacement (11) au pied de la halde de produits en vrac (19) et sur l'autre côté de la structure porteuse (2), un mécanisme de déplacement (15) disposé sur une paroi (20) délimitant le dépôt de produits en vrac (19).

12. Excavateur à portique (16) selon l'une quelconque des revendications précédentes, sachant que l'excavateur à portique (16) est constitué comme un excavateur à portique complet pour lequel un mécanisme de déplacement (11, 15) pour la structure porteuse (2) s'étendant sur la halde de produits en vrac (19) est respectivement disposé sur les deux côtés de la halde de produits en vrac (19) au pied respectif de ceux-ci.
